# FASCICULE DE BREVET EUROPEEN

(11) **EP 1 559 505 B1**
(45) Date de publication et mention de la délivrance du brevet: **13.09.2006**
(21) Numéro de dépôt: 04100349.2
(22) Date de dépôt: 30.01.2004
(51) Int. Cl.: B23Q 17/22, B23Q 15/24, B23Q 11/00, G05B 19/404

(54) **Procédé pour détecter et calculer un écart de positionnement d'un outil entre une position souhaitée et une position effective dudit outil**
Verfahren zum Kalkulieren einer Positionierabweichung eines Werkzeugs zwischen einer Soll- und einer Ist-Position des Werkzeugs
Method for detecting and calculating a positioning error of a tool between a desired and an effective position of the tool

(43) Date de publication de la demande: 03.08.2005
(73) Titulaire: Tornos SA, 2740 Moutier (CH)
(72) Inventeur: Paroz, Cedric, 2732 Saicourt (CH)
(74) Mandataire: BOVARD AG

(56) Documents cités:
- EP-A- 0 899 058

## Description

L'invention se rapporte à un procédé pour détecter et calculer un écart de positionnement d'un outil entre une position souhaitée et une position effective dudit outi (voir, par exemple, EP-0899058-A).

L'invention intéresse plus particulièrement, mais non exclusivement le contrôle de la position d'un outil de type destiné à réaliser un usinage sur une machine d'usinage qui met en oeuvre au moins un tel outil.

Cependant, le terme outil est utilisé ci-après avec une acception très large.

Il peut notamment s'agir d'un outil d'usinage, c'est-à-dire d'un élément destiné à entrer en contact avec une pièce à usiner, par exemple pour enlever de la matière sur cette pièce.

Il peut également s'agir d'un outil de palpage, également destiné à entrer en contact avec une surface d'une pièce lors d'une phase d'essai d'une machine d'usinage.

L'invention se rapporte également aux moyens techniques pour la mise en oeuvre du procédé.

L'invention concerne également les machines-outils qui comprennent les moyens techniques pour mettre en oeuvre le procédé.

L'invention concerne encore le logiciel pour la mise en oeuvre du procédé ainsi que le support magnétique ou optique sur lequel est enregistré ledit logiciel.

L'invention s'applique avantageusement, mais non exclusivement, à la correction de la position d'outils sur des machines d'usinage, dites machines-outils, telles des machines de tournage, pour la production de pièces en série.

Il existe différents phénomènes qui peuvent affecter le positionnement d'un outil d'usinage mais, par exemple on retiendra le phénomène dit "de dérive thermique" engendré par la dilatation de pièces de structure de la machine d'usinage.

Un résultat que l'invention vise à obtenir est un procédé pour détecter et calculer un écart de positionnement d'un outil entre une position souhaitée et une position effective dudit outil, lequel procédé est fiable et précis.

A cet effet, l'invention a pour objet un procédé pour détecter et calculer un écart de positionnement d'un outil entre,
. une position souhaitée prédéterminée de cet outil sur au moins un axe orienté prédéterminé situé dans un espace référentiel prédéterminé dans lequel l'outil décrit une trajectoire prédéterminée, cette position souhaitée étant dite première position, et
. une position effective dudit outil sur l'axe orienté prédéterminé, cette position effective étant dite deuxième position,
l'outil étant associé à un dispositif d'actionnement, pour être déplacé de manière cyclique sur la trajectoire déterminée, depuis une position de départ, dite troisième position prédéterminée sur l'axe orienté prédéterminé, et ce, à une vitesse dont la valeur est une fonction prédéterminée du temps,
ce procédé étant caractérisé en ce que :
- au cours d'une étape préalable, on calcule et on mémorise la durée théorique du trajet accompli par l'outil sur l'axe orienté prédéterminé, entre la troisième position et la première position, ce calcul étant effectué en fonction de l'équation de la vitesse de déplacement de l'outil et de paramètres des dites troisième position et première position sur l'axe orienté prédéterminé, puis lors d'étapes suivantes,
- pendant un nombre déterminé de cycles de déplacement de l'outil, pour chaque cycle,
   . on mesure la durée effective du trajet de l'outil entre la troisième position et la deuxième position, puis,
   . on calcule l'écart de temps qui existe entre la durée théorique du trajet de l'outil et la durée effective du trajet de l'outil, lors du cycle concerné,
- au terme du nombre prédéterminé de cycles,
   . on calcule la valeur de l'écart de temps moyen qui existe entre la durée théorique du trajet de l'outil et la durée effective du trajet de l'outil et, on exploite cette valeur de l'écart de temps moyen pour déterminer la valeur d'un écart de position moyen de l'outil par rapport à la première position,
   . on exploite la valeur de l'écart de position moyen pour influencer le fonctionnement du dispositif d'actionnement de l'outil et corriger des paramètres définissant au moins, la première position de l'outil au moins sur l'axe orienté prédéterminé dans l'espace référentiel.

L'invention concerne également les moyens techniques pour la mise en oeuvre du procédé, ainsi que les machines-outils qui comprennent ces moyens techniques pour mettre en oeuvre le procédé.

L'invention concerne aussi le logiciel pour la mise en oeuvre du procédé ainsi que le support magnétique ou optique sur lequel est enregistré ledit logiciel.

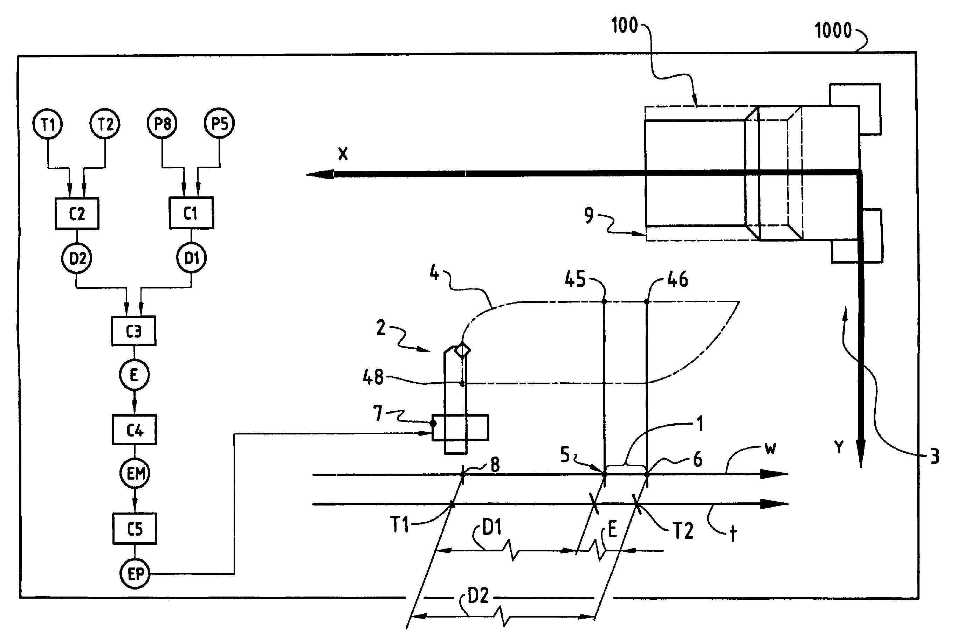

L'invention sera mieux comprise à la lecture de la description ci-après faite à titre d'exemple non limitatif, en regard du dessin ci-annexé qui représente schématiquement, une vue de dessus d'un poste d'usinage d'une pièce au moyen d'un outil déplacé sur une trajectoire prédéterminée et la projection sur un axe orienté prédéterminé (W), de différentes positions de cet outil sur sa trajectoire, chacune de ces positions étant rapportée sur un axe de temps (t).

En se reportant au dessin, on voit un poste d'usinage 10 d'une pièce 100 au moyen d'un outil 2.

Ce poste d'usinage est par exemple situé sur une machine d'usinage 1000.

L'outil 2 est associé à un dispositif d'actionnement 7, pour être déplacé de manière cyclique sur une trajectoire déterminée 4 dans un espace référentiel prédéterminé 3.

Par espace référentiel prédéterminé 3, on désigne un espace référentiel au moins unidimensionnel et de préférence tridimensionnel, dans lequel on situe la pièce 100.

Sur le dessin, un espace référentiel prédéterminé 3 bidimensionnel a été représenté à titre d'exemple.

L'espace référentiel prédéterminé 3 représenté comprend deux axes X et Y orthogonaux, mais cela n'est donc pas limitatif.

Dans cet espace référentiel prédéterminé 3, l'outil 2 est déplacé sur la trajectoire prédéterminée 4 à une vitesse dont la valeur est une équation prédéterminée du temps.

Par exemple, lorsque la machine d'usinage 1000 comprend une structure (non représentée) qui est affectée par une dilatation thermique, cette dilation se répercute généralement sur la qualité des usinages qui sont réalisés sur cette machine d'usinage 1000.

En effet, à cause de cette dilatation de la structure, on constate classiquement un défaut de positionnement d'au moins un outil 2 par rapport à une pièce 100 sur laquelle il doit réaliser une opération d'usinage.

Par exemple, lorsqu'il est déplacé sur la trajectoire 4, l'outil 2 entre en contact avec la pièce 100 plus tard que cela peut être prévu en fonction de l'équation de vitesse.

Cette situation est représentée sur le dessin et illustre le cas où, par exemple à cause d'un phénomène de dilatation, la pièce s'est éloignée d'une position à laquelle elle devrait se trouver.

Ce défaut de positionnement peut être mesuré par projection sur au moins un axe orienté prédéterminé W, c'est-à-dire un axe dont la position peut être définie dans l'espace référentiel prédéterminé 3 dans lequel, on situe la pièce 100.

A titre d'exemple, l'axe orienté prédéterminé W peut correspondre exactement à un axe physique de déplacement de l'outil 2, c'est-à-dire à un axe matérialisé par un dispositif de guidage en translation (non représenté) qui fait partie du dispositif d'actionnement de l'outil 2.

On considèrera cependant que l'axe orienté prédéterminé W est un axe dont la position et l'orientation sont prédéfinies dans l'espace référentiel prédéterminé 3, sans qu'il corresponde obligatoirement à un axe physique exactement définit par un dispositif de guidage en translation.

Lorsque l'outil 2 est déplacé sur la trajectoire prédéterminée 4, un point situé sur cet outil 2 passe en différents points 45, 46, 48 qui sont situés sur la trajectoire prédéterminée 4.

Ces différents points peuvent être géométriquement projetés sur l'axe orienté prédéterminé W.

Conformément à l'invention, pour détecter et calculer un écart de positionnement 1 d'un outil 2 entre,
. une position souhaitée prédéterminée de cet outil 2 sur au moins un axe orienté prédéterminé W situé dans un espace référentiel prédéterminé 3 dans lequel l'outil 2 décrit une trajectoire prédéterminée 4, cette position souhaitée étant dite première position 5, et
. une position effective dudit outil 2 sur l'axe orienté prédéterminé W, cette position effective étant dite deuxième position 6 :
   - au cours d'une étape préalable, on calcule et on mémorise la durée théorique D1 du trajet accompli par l'outil 2 sur l'axe orienté prédéterminé W, entre la troisième position 8 et la première position 5, ce calcul étant effectué en fonction de l'équation de la vitesse de déplacement de l'outil 2 et de paramètres des dites troisième position 8 et première position 5 sur l'axe orienté prédéterminé W, puis lors d'étapes suivantes, lors d'étapes suivantes,
   - pendant un nombre prédéterminé de cycles de déplacement de l'outil 2, pour chaque cycle,
. on mesure la durée effective D2 du trajet de l'outil 2 entre la troisième position 8 et la deuxième position 6, puis,
. on calcule l'écart de temps E qui existe entre la durée théorique D1 du trajet de l'outil 2 et la durée effective D2 du trajet de l'outil 2, lors du cycle concerné,
   - au terme du nombre prédéterminé de cycles,
. on calcule la valeur de l'écart de temps moyen EM qui existe entre la durée théorique D1 du trajet de l'outil 2 et la durée effective D2 du trajet de l'outil 2 et, on exploite cette valeur de l'écart de temps moyen EM pour déterminer la valeur d'un écart de position moyen EP de l'outil 2 par rapport à la première position 5,
. on exploite la valeur de l'écart de position moyen EP pour influencer le fonctionnement du dispositif d'actionnement 7 de l'outil 2 et corriger des paramètres définissant au moins, la première position 5 de l'outil au moins sur l'axe orienté prédéterminé W dans l'espace référentiel 3.

L'invention concerne également les moyens techniques pour la mise en oeuvre du procédé, en vue de détecter et calculer un écart de positionnement 1 d'un outil 2 entre,
. une position souhaitée prédéterminée de cet outil 2 sur au moins un axe orienté prédéterminé W situé dans un espace référentiel prédéterminé 3 dans lequel l'outil 2 décrit une trajectoire prédéterminée 4, cette position souhaitée étant dite première position 5, et
. une position effective dudit outil 2 sur l'axe orienté prédéterminé W, cette position effective étant dite deuxième position 6.

Ces moyens techniques comprennent des cellules fonctionnelles (C1, C2, C3, C4, C5) pour :
- au cours, d'une étape préalable, calculer et mémoriser la durée théorique D1 du trajet accompli par l'outil 2 sur l'axe orienté prédéterminé W, entre la troisième position 8 et la première position 5, ce calcul étant effectué en fonction de l'équation de la vitesse de déplacement de l'outil 2 et de paramètres des dites troisième position 8 et première position 5 sur l'axe orienté prédéterminé W (cellule C1), puis lors d'étapes suivantes,
- pendant un nombre prédéterminé de cycles de déplacement de l'outil 2, pour chaque cycle,
   . mesurer la durée effective D2 du trajet de l'outil 2 entre la troisième position 8 et la deuxième position 6 (cellule C2), puis,
   . calculer l'écart de temps E qui existe entre la durée théorique D 1 du trajet de l'outil 2 et la durée effective D2 du trajet de l'outil 2, lors du cycle concerné (cellule C3),
- au terme du nombre prédéterminé de cycles,
   . calculer la valeur de l'écart de temps moyen EM qui existe entre la durée théorique D1 du trajet de l'outil 2 et la durée effective D2 du trajet de l'outil 2 et, on exploite cette valeur de l'écart de temps moyen EM pour déterminer la valeur d'un écart de position moyen EP de l'outil 2 par rapport à la première position 5 (cellule C4),
   . exploiter la valeur de l'écart de position moyen EP pour influencer le fonctionnement du dispositif d'actionnement 7 de l'outil 2 et corriger des paramètres définissant au moins, la première position 5 de l'outil au moins sur l'axe orienté prédéterminé W dans l'espace référentiel 3 (cellule C5).

Les cellules fonctionnelles peuvent consister en des cellules électroniques physiques conçues pour recevoir et traiter des informations électriques.

Les cellules fonctionnelles peuvent également être virtuelles et consister en des groupes d'instructions exécutées par un ordinateur en fonction d'informations fournies à cet ordinateur.

Ce procédé est particulièrement exploitable lorsque la machine d'usinage 1000 comprend au moins un moyen d'entraînement à fonctionnement incrémental, ce moyen d'entraînement actionnant plusieurs dispositifs d'actionnement 7 d'outil 2 de manière à réaliser une opération d'usinage sur une ébauche de pièce à usiner fixée à un porte-pièce de cette machine d'usinage 1000, ladite machine d'usinage 1000 fonctionnant avec un programme de commande qui utilise des données numériques mémorisées dans une table des pas pour attribuer à chaque moyen d'entraînement une série d'ordres de déplacement incrémentaux se succédant en fonction d'une variable dépendant du temps, la séquence des ordres étant incluse dans la table des pas, ladite table des pas,
. étant établie à partir des résultats d'un calcul définissant la trajectoire d'usinage optimale en fonction du temps, et
. permettant d'obtenir un profil donné avec un matériau donné en tenant compte des caractéristiques de la machine d'usinage 1000.

De manière remarquable, on utilise la valeur de l'écart de position moyen EP pour influencer le fonctionnement du dispositif d'actionnement 7 de l'outil 2 de manière telle que ce dispositif d'actionnement corrige les paramètres de la troisième position 8 de cet outil 2.

Avantageusement, pour effectuer le calcul de l'écart de temps moyen EM à tout instant choisi, on exploite une procédure de calcul dite de moyenne mobile et utilisant un nombre prédéterminé de valeurs précédant la valeur de l'écart de temps relevée à l'instant choisi.

De manière préférentielle, on utilise une procédure de calcul dite de moyenne mobile pondérée.

De manière remarquable, pour mesurer la durée effective D2 du trajet de l'outil 2 entre la troisième position 8 et la deuxième position 6, à partir d'un premier instant T1 auquel l'outil 2 quitte la troisième position 8, on mesure la durée du déplacement de l'outil 2 jusqu'à un second instant T2 auquel on détecte la présence de cet outil 2 dans ladite deuxième position 6.

Les moyens techniques pour la mise en oeuvre du procédé et mesurer la durée effective D2 du trajet de l'outil 2 entre la troisième position 8 et la deuxième position 6, à partir d'un premier instant T1 auquel l'outil 2 quitte la troisième position 8, comprennent au moins une cellule fonctionnelle pour
- détecter la présence de cet outil 2 dans ladite deuxième position 6, et
- mesurer la durée du déplacement de l'outil 2 jusqu'à un second instant T2 auquel la présence de cet outil 2 dans ladite deuxième position 6 est détectée.

De manière également remarquable, pour détecter la présence de l'outil 2 dans ladite deuxième position 3, on définit ladite deuxième position 5 comme une position dans laquelle l'outil 2 vient en contact avec une surface 9 qui est située sur la trajectoire 4 de cet outil 2.

Pour détecter le second instant T2 auquel l'outil 2 vient en contact avec la surface 9 :
- on établit une différence de potentiel entre l'outil 2 et la surface 9, et
- on surveille l'instant auquel un contact électrique est établi entre l'outil 2 et la surface 9 et on considère alors la survenance de cet instant comme constituant le dit second instant T2.

Les moyens techniques pour détecter la présence de l'outil 2 dans ladite deuxième position 6, lorsque ladite deuxième position 6 est définie comme une position dans laquelle l'outil 2 vient en contact avec une surface 9 qui est située sur la trajectoire 4 de cet outil 2, comprennent au moins une cellule fonctionnelle pour :
- établir une différence de potentiel entre l'outil 2 et la surface 9, et
- surveiller l'instant auquel un contact électrique est établi entre l'outil 2 et la surface 9 et considérer la survenance de cet instant comme constituant le dit second instant T2.

Selon une autre manière remarquable, pour détecter le second instant T2 auquel l'outil 2 vient en contact avec la surface 9 :
- on se munit d'au moins un organe, dit organe de détection, permettant :
   . d'une part, de recueillir au moins une variation d'amplitude de valeur au moins égale à la première valeur prédéterminée d'amplitude d'une force extérieure appliquée à l'outil 2, et
   . d'autre part, de générer un signal électrique révélant la présence de cette variation d'amplitude de valeur au moins égale à la première valeur prédéterminée,
- on interpose cet organe de détection entre l'outil 2 et un support de cet outil de manière telle que ledit organe soit soumis au moins aux variations d'amplitude d'une force extérieure appliquée à l'outil 2, au moins lorsqu'il vient en contact avec la surface 9,
- on surveille au niveau de cet outil 2 les variations d'amplitude d'une force extérieure qui est appliquée à cet outil 2, et on recherche l'apparition d'une variation d'amplitude de valeur au moins égale à la première valeur prédéterminée, et
- on surveille, d'une part, l'apparition de la variation d'amplitude de valeur au moins égale à la première valeur prédéterminée et, d'autre part, l'instant auquel une telle variation apparaît et, on considère alors la survenance de cet instant comme constituant le dit second instant T2.

Dans ce cas, les moyens techniques pour détecter la présence de l'outil 2 dans ladite deuxième position 6, lorsque ladite deuxième position 6 est définie comme une position dans laquelle l'outil 2 vient en contact avec une surface 9 qui est située sur la trajectoire 4 de cet outil 2, comprennent :
- au moins un organe, dit organe de détection, permettant :
   . d'une part, de recueillir au moins une variation d'amplitude de valeur au moins égale à la première valeur prédéterminée d'amplitude d'une force extérieure appliquée à l'outil 2, et
   . d'autre part, de générer un signal électrique révélant la présence de cette variation d'amplitude de valeur au moins égale à la première valeur prédéterminée, et
   cet organe de détection étant interposé entre l'outil 2 et un support de cet outil de manière telle que ledit organe soit soumis au moins aux variations d'amplitude d'une force extérieure appliquée à l'outil 2, au moins lorsqu'il vient en contact avec la surface 9,
- au moins une cellule fonctionnelle pour,
   . surveiller au niveau de cet outil 2 les variations d'amplitude d'une force extérieure qui est appliquée à cet outil 2, et rechercher l'apparition d'une variation d'amplitude de valeur au moins égale à la première valeur prédéterminée, et
   . surveiller, d'une part, l'apparition de la variation d'amplitude de valeur au moins égale à la première valeur prédéterminée et, d'autre part, l'instant auquel une telle variation apparaît, de manière à considérer la survenance de cet instant comme constituant le dit second instant T2.

Suivant une autre manière également remarquable, pour détecter le second instant T2 auquel l'outil 2 vient en contact avec la surface 9 :
- on se munit d'au moins d'un contacteur électrique et on équipe l'outil 2 avec ce contacteur électrique de manière telle qu'il soit actionné lorsque l'outil 2 vient en contact avec la surface 9,
- on surveille, d'une part, l'actionnement du contacteur et, d'autre part, l'instant de l'actionnement dudit contacteur et on considère alors la survenance de cet instant comme constituant le dit second instant T2.

Dans ce cas, les moyens techniques pour détecter la présence de l'outil 2 dans ladite deuxième position 6, lorsque ladite deuxième position 6 est définie comme une position dans laquelle l'outil 2 vient en contact avec une surface 9 qui est située sur la trajectoire 4 de cet outil 2, comprennent :
- au moins d'un contacteur électrique et disposé sur l'outil 2 de manière telle que ledit contacteur soit actionné lorsque l'outil 2 vient en contact avec la surface 9,
- au moins une cellule fonctionnelle pour surveiller, d'une part, l'actionnement du contacteur et, d'autre part, l'instant de l'actionnement dudit contacteur et considérer la survenance de cet instant comme constituant le dit second instant T2.

Tel que cela a été indiqué, l'invention concerne aussi un logiciel pour la mise en oeuvre du procédé de l'invention.

Ce logiciel comprend des codes d'instruction propres à être lus ou stockés sur un support, lesdits codes étant exécutables par un ordinateur destiné à générer des ordres de déplacement pour une machine d'usinage 1000 comprenant au moins un moyen d'entraînement à fonctionnement incrémental, ce moyen d'entraînement actionnant au moins un dispositif d'actionnement 7 d'outil 2 de manière à réaliser au moins une opération d'usinage sur une ébauche de pièce à usiner fixée à un porte-pièce de cette machine d'usinage 1000.

Ce logiciel est remarquable en ce qu'il comprend :
- une étape préalable au cours de laquelle on calcule et on mémorise la durée théorique D1 du trajet accompli par l'outil 2 sur l'axe orienté prédéterminé W, entre la troisième position 8 et la première position 5, ce calcul étant effectué en fonction de l'équation de la vitesse de déplacement de l'outil 2 et de paramètres P8 et P5 des dites troisième position 8 et première position 5 sur l'axe orienté prédéterminé W,
- des étapes suivantes durant lesquelles
   a) pendant un nombre prédéterminé de cycles de déplacement de l'outil 2, pour chaque cycle,
      . on mesure la durée effective D2 du trajet de l'outil 2 entre la troisième position 8 et la deuxième position 6, puis,
      . on calcule l'écart de temps E qui existe entre la durée théorique D1 du trajet de l'outil 2 et la durée effective D2 du trajet de l'outil 2, lors du cycle concerné,
   b) au terme du nombre prédéterminé de cycles,
      . on calcule la valeur de l'écart de temps moyen EM qui existe entre la durée théorique D1 du trajet de l'outil 2 et la durée effective D2 du trajet de l'outil 2 et, on exploite cette valeur de l'écart de temps moyen EM pour déterminer la valeur d'un écart de position moyen EP de l'outil 2 par rapport à la première position 5,
      . on exploite la valeur de l'écart de position moyen EP pour influencer le fonctionnement du dispositif d'actionnement 7 de l'outil 2 et corriger des paramètres définissant au moins, la première position 5 de l'outil au moins sur l'axe orienté prédéterminé W dans l'espace référentiel 3.

L'invention est également relative à un support magnétique ou optique sur lequel est enregistré un logiciel comprenant les étapes de procédé selon l'invention et comprenant des codes d'instructions propres à être lus ou stockés sur un support, lesdits codes étant exécutables par un ordinateur destiné à générer des ordres de déplacement pour une machine d'usinage 1000 comprenant au moins un moyen d'entraînement à fonctionnement incrémental, ce moyen d'entraînement actionnant au moins un dispoditif d'actionnement 7 d'outils 2 de manière à réaliser une opération d'usinage sur une ébauche de pièce à usiner fixée à un porte-pièce de cette machine d'usinage 1000.

## Revendications

1. Procédé pour détecter et calculer un écart de positionnement (1) d'un outil (2) entre,
. une position souhaitée prédéterminée de cet outil (2) sur au moins un axe orienté prédéterminé (W) situé dans un espace référentiel prédéterminé (3) dans lequel l'outil (2) décrit une trajectoire prédéterminée (4), cette position souhaitée étant dite première position (5), et
. une position effective dudit outil (2) sur l'axe orienté prédéterminé (W), cette position effective étant dite deuxième position (6),
l'outil (2) étant associé à un dispositif d'actionnement (7), pour être déplacé de manière cyclique sur la trajectoire déterminée (4), depuis une position de départ, dite troisième position (8) prédéterminée sur l'axe orienté prédéterminé (W), et ce, à une vitesse dont la valeur est une fonction prédéterminée du temps F(t),
ce procédé étant **caractérisé en ce que** pour détecter et calculer un écart de positionnement (1) d'un outil (2) entre,
. une position souhaitée prédéterminée de cet outil (2) sur au moins un axe orienté prédéterminé (W) situé dans un espace référentiel prédéterminé (3) dans lequel l'outil (2) décrit une trajectoire prédéterminée (4), cette position souhaitée étant dite première position (5), et
. une position effective dudit outil (2) sur l'axe orienté prédéterminé (W), cette position effective étant dite deuxième position (6) :
- au cours d'une étape préalable, on calcule et on mémorise la durée théorique (D1) du trajet accompli par l'outil (2) sur l'axe orienté prédéterminé (W), entre la troisième position (8) et la première position (5), ce calcul étant effectué en fonction de l'équation de la vitesse de déplacement de l'outil (2) et de paramètres (P8) et (P5) des dites troisième position (8) et première position (5) sur l'axe orienté prédéterminé (W), puis lors d'étapes suivantes,
- pendant un nombre prédéterminé de cycles de déplacement de l'outil (2), pour chaque cycle,
. on mesure la durée effective (D2) du trajet de l'outil (2) entre la troisième position (8) et la deuxième position (6), puis,
. on calcule l'écart de temps (E) qui existe entre la durée théorique (D1) du trajet de l'outil (2) et la durée effective (D2) du trajet de l'outil (2), lors du cycle concerné,
- au terme du nombre prédéterminé de cycles,
. on calcule la valeur de l'écart de temps moyen (EM) qui existe entre la durée théorique (D1) du trajet de l'outil (2) et la durée effective (D2) du trajet de l'outil (2) et, on exploite cette valeur de l'écart de temps moyen (EM) pour déterminer la valeur d'un écart de position moyen (EP) de l'outil (2) par rapport à la première position (5),
. on exploite la valeur de l'écart de position moyen (EP) pour influencer le fonctionnement du dispositif d'actionnement (7) de l'outil (2) et corriger des paramètres définissant au moins, la première position (5) de l'outil au moins sur l'axe orienté prédéterminé (W) dans l'espace référentiel (3).

2. Procédé selon la revendication 1, **caractérisé en ce qu**'on utilise la valeur de l'écart de position moyen (EP) pour influencer le fonctionnement du dispositif d'actionnement (7) de l'outil (2) de manière telle que ce dispositif d'actionnement corrige les paramètres de la troisième position (8) de cet outil (2).

3. Procédé selon la revendication 1 ou 2, **caractérisé en ce que** pour effectuer le calcul de l'écart de temps moyen (EM) à tout instant choisi, on exploite une procédure de calcul dite de moyenne mobile et utilisant un nombre prédéterminé de valeurs précédant la valeur de l'écart de temps relevée à l'instant choisi.

4. Procédé selon la revendication 3, **caractérisé en ce qu'**on utilise une procédure de calcul dite de moyenne mobile pondérée.

5. Procédé selon l'une quelconque des revendication 1 à 4, **caractérisé en ce que** pour mesurer la durée effective (D2) du trajet de l'outil (2) entre la troisième position (8) et la deuxième position (6), à partir d'un premier instant (T1) auquel l'outil (2) quitte la troisième position (8), on mesure la durée du déplacement de l'outil (2) jusqu'à un second instant (T2) auquel on détecte la présence de cet outil (2) dans ladite deuxième position (6).

6. Procédé selon la revendication 5, **caractérisé en ce que** pour détecter la présence de l'outil (2) dans ladite deuxième position (6), on définit ladite deuxième position (6) comme une position dans laquelle l'outil (2) vient en contact avec une surface (9) qui est située sur la trajectoire (4) de cet outil (2).

7. Procédé selon la revendication 6, **caractérisé en ce que** pour détecter le second instant (T2) auquel l'outil (2) vient en contact avec la surface (9) :
- on établit une différence de potentiel entre l'outil (2) et la surface (9), et
- on surveille l'instant auquel un contact électrique est établi entre l'outil (2) et la surface (9) et on considère alors la survenance de cet instant comme constituant le dit second instant (T2).

8. Procédé selon la revendication 6, **caractérisé en ce que** pour détecter le second instant (T2) auquel l'outil (2) vient en contact avec la surface (9) :
- on se munit d'au moins un organe, dit organe de détection, permettant :
. d'une part, de recueillir au moins une variation d'amplitude de valeur au moins égale à la première valeur prédéterminée d'amplitude d'une force extérieure appliquée à l'outil (2), et
. d'autre part, de générer un signal électrique révélant la présence de cette variation d'amplitude de valeur au moins égale à la première valeur prédéterminée,
- on interpose cet organe de détection entre l'outil (2) et un support de cet outil de manière telle que ledit organe soit soumis au moins aux variations d'amplitude d'une force extérieure appliquée à l'outil (2), au moins lorsqu'il vient en contact avec la surface (9),
- on surveille au niveau de cet outil (2) les variations d'amplitude d'une force extérieure qui est appliquée à cet outil (2), et on recherche l'apparition d'une variation d'amplitude de valeur au moins égale à la première valeur prédéterminée, et
- on surveille, d'une part, l'apparition de la variation d'amplitude de valeur au moins égale à la première valeur prédéterminée et, d'autre part, l'instant auquel une telle variation apparaît et on considère alors la survenance de cet instant comme constituant le dit second instant (T2).

9. Procédé selon la revendication 6, **caractérisé en ce que** pour détecter le second instant (T2) auquel l'outil (2) vient en contact avec la surface (9) :
- on se munit d'au moins d'un contacteur électrique et on équipe l'outil (2) avec ce contacteur électrique de manière telle qu'il soit actionné lorsque l'outil (2) vient en contact avec la surface (9),
- on surveille, d'une part, l'actionnement du contacteur et, d'autre part, l'instant de l'actionnement dudit contacteur et on considère alors la survenance de cet instant comme constituant le dit second instant (T2).

10. Moyens techniques pour la mise en oeuvre du procédé selon l'une quelconque des revendications 1 à 9, **caractérisés en ce qu'**ils comprennent des cellules fonctionnelles pour :
- au cours, d'une étape préalable, calculer et mémoriser la durée théorique (D1) du trajet accompli par l'outil (2) sur l'axe orienté prédéterminé (W), entre la troisième position (8) et la première position (5), ce calcul étant effectué en fonction de l'équation de la vitesse de déplacement de l'outil (2) et de paramètres (P8) et (P5) des dites troisième position (8) et première position (5) sur l'axe orienté prédéterminé (W), puis lors d'étapes suivantes,
- pendant un nombre prédéterminé de cycles de déplacement de l'outil (2), pour chaque cycle,
. mesurer la durée effective (D2) du trajet de l'outil (2) entre la troisième position (8) et la deuxième position (6), puis,
. calculer l'écart de temps (E) qui existe entre la durée théorique (D1) du trajet de l'outil (2) et la durée effective (D2) du trajet de l'outil (2), lors du cycle concerné,
- au terme du nombre prédéterminé de cycles,
. calculer la valeur de l'écart de temps moyen (EM) qui existe entre la durée théorique (D1) du trajet de l'outil (2) et la durée effective (D2) du trajet de l'outil (2) et, on exploite cette valeur de l'écart de temps moyen (EM) pour déterminer la valeur d'un écart de position moyen (EP) de l'outil (2) par rapport à la première position (5),
. exploiter la valeur de l'écart de position moyen (EP) pour influencer le fonctionnement du dispositif d'actionnement (7) de l'outil (2) et corriger des paramètres définissant au moins, la première position (5) de l'outil au moins sur l'axe orienté prédéterminé (W) dans l'espace référentiel (3).

11. Moyens selon la revendication 10 pour mesurer la durée effective (D2) du trajet de l'outil (2) entre la troisième position (8) et la deuxième position (6), à partir d'un premier instant (T1) auquel l'outil (2) quitte la troisième position (8), ces moyens techniques étant **caractérisés en ce qu'**ils comprennent au moins une cellule fonctionnelle pour :
- détecter la présence de cet outil (2) dans ladite deuxième position (6), et
- mesurer la durée du déplacement de l'outil (2) jusqu'à un second instant (T2) auquel la présence de cet outil (2) dans ladite deuxième position (6) est détectée.

12. Moyens techniques selon la revendication 11 pour détecter la présence de l'outil (2) dans ladite deuxième position (6), lorsque ladite deuxième position (6) est définie comme une position dans laquelle l'outil (2) vient en contact avec une surface (9) qui est située sur la trajectoire (4) de cet outil (2), comprennent au moins une cellule fonctionnelle pour :
- établir une différence de potentiel entre l'outil (2) et la surface (9), et
- surveiller l'instant auquel un contact électrique est établi entre l'outil (2) et la surface (9) et considérer la survenance de cet instant comme constituant le dit second instant (T2).

13. Moyens techniques selon la revendication 11 pour détecter la présence de l'outil (2) dans ladite deuxième position (6), lorsque ladite deuxième position 6, est définie comme une position dans laquelle l'outil (2) vient en contact avec une surface (9) qui est située sur la trajectoire (4) de cet outil (2), comprennent :
- au moins un organe, dit organe de détection, permettant :
. d'une part, de recueillir au moins une variation d'amplitude de valeur au moins égale à la première valeur prédéterminée d'amplitude d'une force extérieure appliquée à l'outil (2), et
. d'autre part, de générer un signal électrique révélant la présence de cette variation d'amplitude de valeur au moins égale à la première valeur prédéterminée, et
cet organe de détection étant interposé entre l'outil (2) et un support de cet outil de manière telle que ledit organe soit soumis au moins aux variations d'amplitude d'une force extérieure appliquée à l'outil (2), au moins lorsqu'il vient en contact avec la surface (9),
- au moins une cellule fonctionnelle pour,
. surveiller au niveau de cet outil (2) les variations d'amplitude d'une force extérieure qui est appliquée à cet outil (2), et rechercher l'apparition d'une variation d'amplitude de valeur au moins égale à la première valeur prédéterminée, et
. surveiller, d'une part, l'apparition de la variation d'amplitude de valeur au moins égale à la première valeur prédéterminée et, d'autre part, l'instant auquel une telle variation apparaît, de manière à considérer la survenance de cet instant comme constituant le dit second instant (T2).

14. Moyens techniques selon la revendication 11 pour détecter la présence de l'outil (2) dans ladite deuxième position (6), lorsque ladite deuxième position (6) est définie comme une position dans laquelle l'outil (2) vient en contact avec une surface (9) qui est située sur la trajectoire (4) de cet outil (2), comprennent :
- au moins d'un contacteur électrique et disposé sur l'outil (2) de manière telle que ledit contacteur soit actionné lorsque l'outil (2) vient en contact avec la surface (9),
- au moins une cellule fonctionnelle pour surveiller, d'une part, l'actionnement du contacteur et, d'autre part, l'instant de l'actionnement dudit contacteur et considérer la survenance de cet instant comme constituant le dit second instant (T2).

15. Machine d'usinage (1000) comprenant au moins un moyen d'entraînement à fonctionnement incrémental, ce moyen d'entraînement actionnant plusieurs dispositifs d'actionnement (7) d'outil (2) de manière à réaliser une opération d'usinage sur une ébauche de pièce à usiner fixée à un porte-pièce de cette machine d'usinage (1000), ladite machine d'usinage (1000) fonctionnant avec un programme de commande qui utilise des données numériques mémorisées dans une table des pas pour attribuer à chaque moyen d'entraînement une série d'ordres de déplacement incrémentaux se succédant en fonction d'une variable dépendant du temps, la séquence des ordres étant incluse dans la table des pas, ladite table des pas,
. étant établie à partir des résultats d'un calcul définissant la trajectoire d'usinage optimale en fonction du temps, et
. permettant d'obtenir un profil donné avec un matériau donné en tenant compte des caractéristiques de la machine d'usinage (1000), cette machine d'usinage étant **caractérisée en ce qu'**elle comprend les moyens techniques des revendications 10 à 14, pour mettre en oeuvre le procédé selon l'une quelconque des revendications 1 à 9.

16. Logiciel pour la mise en oeuvre du procédé selon l'une quelconque des revendications 1 à 9, ce logiciel comprenant des codes d'instruction propres à être lus ou stockés sur un support, lesdits codes étant exécutables par un ordinateur destiné à générer des ordres de déplacement pour une machine d'usinage (1000) comprenant au moins un moyen d'entraînement à fonctionnement incrémental, ce moyen d'entraînement actionnant au moins un dispositif d'actionnement (7) d'outil (2) de manière à réaliser au moins une opération d'usinage sur une ébauche de pièce à usiner fixée à un porte-pièce de cette machine d'usinage (1000), ledit logiciel étant **caractérisé en ce qu'**il comprend :
- une étape préalable au cours de laquelle on calcule et on mémorise la durée théorique (D1) du trajet accompli par l'outil (2) sur l'axe orienté prédéterminé (W), entre la troisième position (8) et la première position (5), ce calcul étant effectué en fonction de l'équation de la vitesse de déplacement de l'outil (2) et de paramètres (P8) et (P5) des dites troisième position (8) et première position (5) sur l'axe orienté prédéterminé (W),
- des étapes suivantes durant lesquelles
a) pendant un nombre prédéterminé de cycles de déplacement de l'outil (2), pour chaque cycle,
. on mesure la durée effective (D2) du trajet de l'outil (2) entre la troisième position (8) et la deuxième position (6), puis,
. on calcule l'écart de temps (E) qui existe entre la durée théorique (D1) du trajet de l'outil (2) et la durée effective (D2) du trajet de l'outil (2), lors du cycle concerné,
b) au terme du nombre prédéterminé de cycles,
. on calcule la valeur de l'écart de temps moyen (EM) qui existe entre la durée théorique (D1) du trajet de l'outil (2) et la durée effective (D2) du trajet de l'outil (2) et, on exploite cette valeur de l'écart de temps moyen (EM) pour déterminer la valeur d'un écart de position moyen (EP) de l'outil (2) par rapport à la première position (5),
. on exploite la valeur de l'écart de position moyen (EP) pour influencer le fonctionnement du dispositif d'actionnement (7) de l'outil (2) et corriger des paramètres définissant au moins, la première position (5) de l'outil au moins sur l'axe orienté prédéterminé (W) dans l'espace référentiel (3).

17. Support magnétique ou optique sur lequel est enregistré un logiciel comprenant les étapes de procédé selon la revendication 1 et comprenant des codes d'instructions propres à être lus ou stockés sur un support, lesdits codes étant exécutables par un ordinateur destiné à générer des ordres de déplacement pour une machine d'usinage (1000) comprenant au moins un moyen d'entraînement à fonctionnement incrémental, ce moyen d'entraînement actionnant au moins un dispositif d'actionnement (7) d'outil (2) de manière à réaliser une opération d'usinage sur une ébauche de pièce à usiner fixée à un porte-pièce de cette machine d'usinage (1000).

## Claims

1. Method for detecting and calculating a positional deviation (1) of a tool (2) between
• a predetermined desired position of this tool (2) on at least one predetermined oriented axis (W) situated in a predetermined referential space (3) in which the tool (2) describes a predetermined path (4), this desired position being referred to as first position (5), and
• an actual position of said tool (2) on the predetermined oriented axis (W), this actual position being referred to as second position (6),
the tool (2) being connected to an actuating device (7) to be displaced in cyclical manner on the predetermined path (4), from a position of departure, referred to as third predetermined position (8) on the predetermined oriented axis (W), and this at a speed the value of which is a predetermined function of the time F(t),
this method being **characterised in that** to detect and to calculate a positional deviation (1) of a tool (2) between
• a predetermined desired position of this tool (2) on at least one predetermined oriented axis (W) situated in a predetermined referential space (3) in which the tool (2) describes a predetermined path (4), this desired position being referred to as first position (5), and
• an actual position of said tool (2) on the predetermined oriented axis (W), this actual position being referred to as second position (6):
- in the course of a preliminary step, the theoretical duration (D1) of the passage made by the tool (2) on the predetermined oriented axis (W), between the third position (8) and the first position (5) is calculated and stored, this calculation being carried out as a function of the equation of the speed of displacement of the tool (2) and parameters (P8) and (P5) of said third position (8) and first position (5) on the predetermined oriented axis (W), then at the time of the following steps,
- during a predetermined number of cycles of displacement of the tool (2), for each cycle,
• the actual duration (D2) is measured of the passage of the tool (2) between the third position (8) and the second position (6), then
• the deviation in time (E) is calculated which exists between the theoretical duration (D1) of the passage of the tool (2) and the actual duration (D2) of the passage of the tool (2), at the time of the cycle concerned,
- at the end of the predetermined number of cycles,
• the value of the average time divergence (EM) is calculated that exists between the theoretical duration (D1) of the passage of the tool (2) and the actual duration (D2) of the passage of the tool (2), and this average time divergence value is used to determine the value of an average position divergence (EP) for the tool (2) with respect to the first position (5),
• the value of the average position divergence (EP) is used to influence the operation of the actuating device (7) of the tool (2) and to correct parameters defining at least the first position (5) of the tool at least on the predetermined oriented axis (W) in the referential space (3).

2. Method according to claim 1, **characterised in that** the value of the average position divergence (EP) is used to influence the operation of the actuating device (7) of the tool (2) in such a way that this actuating device corrects the parameters of the third position (8) of this tool (2).

3. Method according to claim 1 or 2, **characterised in that** to perform the calculation of the average time divergence (EM) at any chosen instant, a calculation procedure is used, referred to as calculation of the moving average, and using a predetermined number of values preceding the value of the time divergence taken at the chosen instant.

4. Method according to claim 3, **characterised in that** is a calculation method is used referred to as calculation of the weighted moving average.

5. Method according to any one of the claims 1 to 4, **characterised in that** to measure the actual duration (D2) of the passage of the tool (2) between the third position (8) and the second position (6), starting from the first instant (T1) at which the tool (2) leaves the third position (8), the duration of displacement of the tool (2) is measured until a second instant (T2) at which the presence of this tool (2) in said second position (6) is detected.

6. Method according to claim 5, **characterised in that** to detect the presence of the tool (2) in said second position (6), said second position (6) is defined as a position in which the tool (2) comes into contact with a surface (9) which is situated on the path (4) of this tool (2).

7. Method according to claim 6, **characterised in that** to detect the second instant (T2) at which the tool (2) comes into contact with the surface (9):
- a difference in voltage is established between the tool (2) and the surface (9), and
- the instant is monitored at which an electrical contact is established between the tool (2) and the surface (9) and then the occurrence of that instant is considered as constituting said second instant (T2).

8. Method according to claim 6, **characterised in that** to detect the second instant (T2) at which the tool (2) comes into contact with the surface (9):
- at least one element, referred to as detection element, is provided, permitting:
• on the one hand, to capture at least one variation in range of value at least equal to the first predetermined value of range of an external force applied to the tool (2), and
• on the other hand, to generate an electrical signal revealing the presence of this variation in range of value at least equal to the first predetermined value,
- this detection element is placed between the tool (2) and a support for this tool in such a way that said element is subjected at least to the variations in range of an external force applied to the tool (2), at least when it comes into contact with the surface (9),
- at the level of this tool (2), the variations in range of an external force which is applied to this tool (2) are monitored, and sought is the occurrence of a variation in range of value at least equal to the first predetermined value, and
- on the one hand, the occurrence of the variation in range of value at least equal to the first predetermined value is monitored, and, on the other hand, the instant at which such a variation occurs, and then the occurrence of this instant is considered as constituting said second instant (T2).

9. Method according to claim 6, **characterised in that** to detect the second instant (T2) at which the tool (2) comes into contact with the surface (9):
- at least one electrical contactor is provided and the tool (2) is equipped with this electrical contactor in such a way that it is actuated when the tool (2) comes into contact with the surface (9),
- on one hand, the actuation of the contactor is monitored, and, on the other hand, the instant of actuation of said contactor, and the occurrence of this instant is then considered as constituting said second instant (T2).

10. Technical means for implementing the method according to any one of the claims 1 to 9, **characterised in that** they comprise functional cells for:
- in the course of a preliminary step, calculating and storing the theoretical duration (D1) of the passage achieved by the tool (2) on the predetermined oriented axis (W), between the third position (8) and the first position (5), this calculation being carried out as a function of the equation of the speed of displacement of the tool (2) and of parameters (P8) and (P5) of said third position (8) and first position (5) on the predetermined oriented axis (W), then at the time of subsequent steps,
- during a predetermined number of cycles of displacement of the tool (2), for each cycle,
• measuring the actual duration (D2) of the passage of the tool (2) between the third position (8) and the second position (6), then
• calculating the divergence in time (E) which exists between the theoretical duration (D1) of the passage of the tool (2) and the actual duration (D2) of the passage of the tool (2), at the time of the cycle concerned,
- at the end of the predetermined number of cycles,
• calculating the value of the average divergence in time (EM) which exists between the theoretical duration (D1) of the passage of the tool (2) and the actual duration (D2) of the passage of the tool (2), and this value of average divergence in time (EM) is used for determining the value of an average divergence in position (EP) of the tool (2) with respect to the first position (5),
• the value of the average position divergence (EP) is used to influence the operation of the actuating device (7) of the tool (2) and to correct defined parameters, at least the first position (5) of the tool at least on the predetermined oriented axis (W) in the referential space (3).

11. Means according to claim 10 for measuring the actual duration (D2) of the passage of the tool (2) between the third position (8) and the second position (6), starting from the first instant (T1) at which the tool (2) leaves the third position (8), these technical means being **characterised in that** they comprise at least one functional cell for:
- detecting the presence of this tool (2) in said second position (6), and
- measuring the duration of the displacement of the tool (2) until a second instant (T2) at which the presence of this tool (2) in said second position (6) is detected.

12. Technical means according to claim 11 for detecting the presence of the tool (2) in said second position (6), when said second position (6) is defined as a position in which the tool (2) comes into contact with a surface (9) that is situated on the path (4) of this tool (2), comprising at least one functioning cell for:
- establishing a difference in voltage between the tool (2) and the surface (9), and
- monitoring the instant at which an electrical contact is established between the tool (2) and the surface (9) and considering the occurrence of this instance as constituting said second instant (T2).

13. Technical means according to claim 11 for detecting the presence of the tool (2) in said second position (6), when said second position (6) is defined as a position in which the tool (2) comes into contact with a surface (9) which is situated on the path (4) of this tool (2), comprising :
- at least one element , referred to as detection element, permitting:
• on one hand, to capture at least one variation in range of value at least equal to the first predetermined value of range of an external force applied to the tool (2), and
• on the other hand, to generate an electrical signal revealing the presence of this variation in range of value at least equal to the first predetermined value, and
this detection element being placed between the tool (2) and a support for this tool in such a way that said element is subjected at least to variations in range of an external force applied to the tool (2), at least when it comes into contact with the surface (9),
- at least one functional cell for
• monitoring at the level of this tool (2) the variations in range of an external force which is applied to this tool (2), and searching for the occurrence of a variation in range of value at least equal to the first predetermined value, and
• monitoring, on the one hand, the occurrence of the variation in range of value at least equal to the first predetermined value, and, on the other hand, the instant at which such a variation occurs, in a way so as to consider the occurrence of this instant as constituting said second instant (T2).

14. Technical means according to claim 11 for detecting the presence of the tool (2) in said second position (6), when said second position (6) is defined as a position in which the tool (2) comes into contact with a surface (9) which is situated on the path (4) of this tool (2), comprising:
- at least one electrical contactor and disposed on the tool (2) in such a way that said contactor is actuated when the tool (2) comes into contact with the surface (9),
- at least one functional cell to monitor, on the one hand, the actuation of the contactor and, on the other hand, the instant of actuation of said contactor and to consider the occurrence of that instant as constituting said second instant (T2).

15. Machine tool (1000) comprising at least one incremental operation actuation means, this actuation means actuating a plurality of tool (2) actuation devices (7) in such a way as to achieve a machining operation on a blank for a piece to be machined fixed to a piece holder of this machine tool (1000), said machine tool (1000) functioning with a control program that uses stored numerical data in a step table to attribute to each actuation means a series of incremental displacement commands following one another as a function of a time-dependent variable, the sequence of commands being included in the step table, said step table
• being established starting with results of a calculation defining the optimal machining path as a function of time, and
• permitting a given contour to be obtained with a given material, taking into account features of the machine tool (1000), this machine tool being **characterised in that** it comprises the technical means of claims 10 to 14, for implementing the method according to any one of the claims 1 to 9.

16. Software for implementing the method according to any one of the claims 1 to 9, this software comprising instruction codes suitable for being read or stored on a medium, said codes being executable by a computer intended to generate displacement commands for a machine tool (1000) comprising at least one incremental operation actuation means, this actuation means actuating at least one tool (2) actuation device (7) in such a way as to achieve at least one machining operation on a blank for a piece to be machined fixed to a piece holder of this machine tool (1000), said software being **characterised in that** it comprises:
- a preliminary step in the course of which the theoretical duration (D1) is calculated and stored of the path achieved by the tool (2) on the predetermined oriented axis (W), between the third position (8) and the first position (5), this calculation being carried out as a function of the equation of the speed of displacement of the tool (2) and of parameters (P8) and (P5) of said third position (8) and first position (5) on the predetermined oriented axis (W),
- subsequent steps in the course of which
a) during a predetermined number of cycles of displacement of the tool (2), for each cycle,
• the actual duration (D2) is measured of the path of the tool (2) between the third position (8) and the second position (6), then
• the divergence in time (E) is calculated which exists between the theoretical duration (D1) of the path of the tool (2) and the actual duration (D2) of the path of the tool (2), at the time of the cycle concerned,
b) at the end of the predetermined number of cycles
• the value of the average divergence in time (EM) is calculated which exists between the theoretical duration (D1) of the path of the tool (2) and the actual duration (D2) of the path of the tool (2), and this value of average divergence in time (EM) is used for determining the value of an average divergence in position (EP) of the tool (2) with respect to the first position (5),
• the value of the average divergence in position (EP) is used to influence the operation of the actuation device (7) of the tool (2) and to correct parameters defining at least the first position (5) of the tool at least on the predetermined oriented axis (W) in the referential space (3).

17. Magnetic or optical medium on which a software is registered comprising the steps of the method according to claim 1 and comprising instruction codes suitable to be read or stored on a medium, said codes being executable by a computer intended to generate displacement commands for a machine tool (1000) comprising at least one incremental operation actuation means, this actuation means actuating at least one tool (2) actuation device (7) in such a way as to achieve a machining operation on a blank for a piece to be machined fixed to a piece holder of this machine tool (1000).

## Patentansprüche

1. Verfahren zur Erkennung und Berechnung einer Positionsabweichung (1) eines Werkzeugs (2) zwischen
. einer vorgegebenen Soll-Position dieses Werkzeugs (2) auf mindestens einer vorgegebenen, ausgerichteten Achse (W), die in einem vorgegebenen Bezugsraum (3) liegt, in dem das Werkzeug (2) einer vorgegebenen Bahn (4) folgt, wobei diese Soll-Position als erste Position (5) bezeichnet wird, und
. einer Ist-Position des genannten Werkzeugs (2) auf der vorgegebenen, ausgerichteten Achse (W), wobei diese Ist-Position als zweite Position (6) bezeichnet wird,
wobei das Werkzeug (2) mit einer Betätigungsvorrichtung (7) verbunden ist, um auf der festgelegten Bahn (4) ausgehend von einer als dritte Position (8) bezeichneten, vorgegebenen Ausgangsposition auf der vorgegebenen, ausgerichteten Achse (W) zyklisch verfahren zu werden, und dies mit einer Geschwindigkeit, deren Wert eine vorgegebene Funktion der Zeit F(t) ist,
wobei dieses Verfahren **dadurch gekennzeichnet ist, dass** man zur Erkennung und Berechnung einer Positionsabweichung (1) eines Werkzeugs (2) zwischen
. einer vorgegebenen Soll-Position dieses Werkzeugs (2) auf mindestens einer vorgegebenen, ausgerichteten Achse (W), die in einem vorgegebenen Bezugsraum (3) liegt, in dem das Werkzeug (2) einer vorgegebenen Bahn (4) folgt, wobei diese Soll-Position als erste Position (5) bezeichnet wird, und
. einer Ist-Position des genannten Werkzeugs (2) auf der vorgegebenen, ausgerichteten Achse (W), wobei diese Ist-Position als zweite Position (6) bezeichnet wird:
- in einem vorausgehenden Schritt die theoretische Dauer (D1) für den vom Werkzeug (2) auf der vorgegebenen, ausgerichteten Achse (W) zwischen der dritten Position (8) und der ersten Position (5) zurücklegten Verfahrweg berechnet und speichert, wobei diese Berechnung in Abhängigkeit von der Gleichung für die Verfahrgeschwindigkeit des Werkzeugs (2) und von Parametern (P8) und (P5) der genannten dritten Position (8) und ersten Position (5) auf der vorgegebenen, ausgerichteten Achse (W) ausgeführt wird, und man dann bei den folgenden Schritten
- während einer vorgegebenen Anzahl von Verfahrzyklen des Werkzeugs (2) für jeden Zyklus
. die Ist-Dauer (D2) der Fahrt des Werkzeugs (2) zwischen der dritten Position (8) und der zweiten Position (6) misst, und dann
. den Zeitunterschied (E) berechnet, der während des betreffenden Zyklus zwischen der theoretischen Dauer (D1) der Fahrt des Werkzeugs (2) und der Ist-Dauer (D2) der Fahrt des Werkzeugs (2) besteht,
- man am Ende der vorgegebenen Anzahl von Zyklen
. den Wert des durchschnittlichen Zeitunterschieds (EM) berechnet, der zwischen der theoretischen Dauer (D1) der Fahrt des Werkzeugs (2) und der Ist-Dauer (D2) der Fahrt des Werkzeugs (2) besteht, und diesen Wert des durchschnittlichen Zeitunterschieds (EM) zur Ermittlung des Wertes einer durchschnittlichen Positionsabweichung (EP) des Werkzeugs (2) zur ersten Position (5) heranzieht,
. den Wert der durchschnittlichen Positionsabweichung (EP) zur Beeinflussung des Betriebs der Betätigungsvorrichtung (7) des Werkzeugs (2) und zur Korrektur der Parameter heranzieht, die zumindest die erste Position (5) des Werkzeugs zumindest auf der vorgegebenen, ausgerichteten Achse (W) im Bezugsraum (3) bestimmen.

2. Verfahren nach Anspruch 1, **dadurch gekennzeichnet, dass** man den Wert der durchschnittlichen Positionsabweichung (EP) so zur Beeinflussung der Betätigungsvorrichtung (7) des Werkzeugs (2) benutzt, dass diese Betätigungsvorrichtung des Werkzeugs die Parameter der dritten Position (8) dieses Werkzeugs (2) korrigiert.

3. Verfahren nach Anspruch 1 oder 2, **dadurch gekennzeichnet, dass** man zur Berechnung des durchschnittlichen Zeitunterschieds (EM) an jedem beliebig gewählten Zeitpunkt eine Methode zur Berechnung des sogenannten gleitenden Mittels anwendet und eine vorgegebene Anzahl an Werten benutzt, die dem am gewählten Zeitpunkt festgestellten Wert des Zeitunterschieds vorausgehen.

4. Verfahren nach Anspruch 3, **dadurch gekennzeichnet, dass** man eine Methode zur Berechnung des sogenannten gewichteten gleitenden Mittels benutzt.

5. Verfahren nach einem der Ansprüche 1 bis 4, **dadurch gekennzeichnet, dass** man zur Messung der Ist-Dauer (D2) der Fahrt des Werkzeugs (2) zwischen der dritten Position (8) und der zweiten Position (6) die Verfahrdauer des Werkzeugs (2) von einem ersten Zeitpunkt (T1), an dem das Werkzeug die dritte Position (8) verlässt, bis zu einem zweiten Zeitpunkt (T2) misst, an dem das Werkzeug (2) an der genannten zweiten Position (6) erkannt wird.

6. Verfahren nach Anspruch 5, **dadurch gekennzeichnet, dass** für die Erkennung des Werkzeugs (2) an der genannten zweiten Position (6) die genannte zweite Position (6) als eine Position definiert wird, in der das Werkzeug (2) eine Fläche (9) berührt, die sich auf der Bahn (4) dieses Werkzeugs (2) befindet.

7. Verfahren nach Anspruch 6, **dadurch gekennzeichnet, dass** man zur Erkennung eines zweiten Zeitpunktes (T2), an dem das Werkzeug (2) die Fläche (9) berührt:
- einen Spannungsunterschied zwischen dem Werkzeug (2) und der Fläche (9) herstellt und
- den Zeitpunkt überwacht, an dem ein elektrischer Kontakt zwischen dem Werkzeug (2) und der Fläche (9) hergestellt wird, und man annimmt, das das Eintreten dieses Zeitpunktes den genannten zweiten Zeitpunkt (T2) darstellt.

8. Verfahren nach Anspruch 6, **dadurch gekennzeichnet, dass** man zur Erkennung des zweiten Zeitpunktes (T2), an dem das Werkzeug (2) die Fläche (9) berührt:
- mindestens ein Organ, das sogenannte Erkennungsorgan, vorsieht, das es gestattet:
. einerseits mindestens eine Amplitudenänderung einer Stärke aufzunehmen, die mindestens gleich dem ersten vorgegebenen Amplitudenwert einer von außen auf das Werkzeug (2) wirkenden Kraft ist, und
. andererseits ein elektrisches Signal zu erzeugen, welches das Vorhandensein dieser Amplitudenänderung von mindestens der gleichen Stärke wie der des ersten vorgegebenen Wertes meldet, und
- dieses Erkennungsorgan so zwischen dem Werkzeug (2) und einer Halterung dieses Werkzeugs platziert, dass das genannte Organ zumindest den Amplitudenänderungen einer von außen auf das Werkzeug (2) wirkenden Kraft ausgesetzt wird, zumindest wenn es die Fläche (9) berührt,
- an diesem Werkzeug (2) die Amplitudenänderungen einer von außen auf das Werkzeug (2) wirkenden Kraft überwacht, und auf das Auftreten einer Amplitudenänderung von mindestens der gleichen Stärke wie der des ersten vorgegebenen Wertes achtet, und
- einerseits das Auftreten der Amplitudenänderung von mindestens der gleichen Stärke wie der des ersten vorgegebenen Wertes und andererseits den Zeitpunkt überwacht, an dem eine solche Änderung auftritt und man dann annimmt, dass das Eintreten dieses Zeitpunktes den genannten zweiten Zeitpunkt (T2) darstellt.

9. Verfahren nach Anspruch 6, **dadurch gekennzeichnet, dass** man zur Erkennung des zweiten Zeitpunktes (T2), an dem das Werkzeug (2) die Fläche (9) berührt:
- mindestens ein elektrisches Schütz vorsieht, und man das Werkzeug (2) so mit diesem elektrischen Schütz ausrüstet, dass es betätigt wird, wenn das Werkzeug (2) die Fläche (9) berührt.
- einerseits die Betätigung des Schützes und andererseits den Zeitpunkt der Betätigung des genannten Schützes überwacht und dann annimmt, dass das Eintreten dieses Zeitpunktes den genannten zweiten Zeitpunkt (T2) darstellt.

10. Technische Mittel zur Anwendung des Verfahrens nach einem der Ansprüche 1 bis 9, **dadurch gekennzeichnet, dass** sie Funktionszellen aufweisen, um:
- in einem vorausgehenden Schritt die theoretische Dauer (D1) für den vom Werkzeug (2) auf der vorgegebenen, ausgerichteten Achse (W) zwischen der dritten Position (8) und der ersten Position (5) zurücklegten Verfahrweg zu berechnen und zu speichern, wobei diese Berechnung in Abhängigkeit von der Gleichung für die Verfahrgeschwindigkeit des Werkzeugs (2) und von Parametern (P8) und P5) der genannten dritten Position (8) und ersten Position (5) auf der vorgegebenen, ausgerichteten Achse (W) ausgeführt wird, und dann bei den folgenden Schritten
- während einer vorgegebenen Anzahl von Verfahrzyklen des Werkzeugs (2) für jeden Zyklus
. die Ist-Dauer (D2) der Fahrt des Werkzeugs (2) zwischen der dritten Position (8) und der zweiten Position (6) zu messen, und dann
. den Zeitunterschied (E) zu berechnen, der während des betreffenden Zyklus zwischen der theoretischen Dauer (D1) der Fahrt des Werkzeugs (2) und der Ist-Dauer (D2) der Fahrt des Werkzeugs (2) besteht,
- am Ende der vorgegebenen Anzahl von Zyklen
. den Wert des durchschnittlichen Zeitunterschieds (EM) zu berechnen, der zwischen der theoretischen Dauer (D1) der Fahrt des Werkzeugs (2) und der Ist-Dauer (D2) der Fahrt des Werkzeugs (2) besteht, und diesen Wert des durchschnittlichen Zeitunterschieds (EM) zur Ermittlung des Wertes einer durchschnittlichen Positionsabweichung (EP) des Werkzeugs (2) zur ersten Position (5) heranzuziehen,
. den Wert der durchschnittlichen Positionsabweichung (EP) zur Beeinflussung der Betätigungsvorrichtung (7) des Werkzeugs (2) und zur Korrektur der Parameter heranzuziehen, die zumindest die erste Position (5) des Werkzeugs zumindest auf der vorgegebenen, ausgerichteten Achse (W) im Bezugsraum (3) bestimmen.

11. Mittel nach Anspruch 10 zur Messung der Ist-Dauer (D2) der Fahrt des Werkzeugs (2) zwischen der dritten Position (8) und der zweiten Position (6) von einem ersten Zeitpunkt (T1), an dem das Werkzeug (2) die dritte Position (8) verlässt, wobei diese technischen Mittel **dadurch gekennzeichnet sind, dass** sie mindestens eine Funktionszelle aufweisen, um
- das Werkzeug (2) an der genannten zweiten Position (6) zu erkennen und
- die Verfahrdauer des Werkzeugs (2) bis zu einem zweiten Zeitpunkt (T2) zu messen, an dem das Werkzeug (2) an der genannten zweiten Position (6) erkannt wird.

12. Technische Mittel nach Anspruch 11 zur Erkennung des Werkzeugs (2) an der genannten zweiten Position (6), wenn die genannte zweite Position (6) als eine Position definiert ist, an der das Werkzeug (2) eine Fläche (9) berührt, die sich auf der Bahn (4) dieses Werkzeugs (2) befindet, die mindestens eine Funktionszelle aufweisen, um:
- einen Spannungsunterschied zwischen dem Werkzeug (2) und der Fläche (9) herzustellen und
- den Zeitpunkt zu überwachen, an dem ein elektrischer Kontakt zwischen dem Werkzeug (2) und der Fläche (9) hergestellt wird, und anzunehmen, dass das Eintreten dieses Zeitpunktes den genannten zweiten Zeitpunkt (T2) darstellt.

13. Technische Mittel nach Anspruch 11 zur Erkennung des Werkzeugs (2) an der genannten zweiten Position (6), wenn die genannte zweite Position (6) als eine Position definiert ist, an der das Werkzeug (2) eine Fläche (9) berührt, die sich auf der Bahn (4) dieses Werkzeugs (2) befindet, die folgendes aufweisen:
- mindestens ein Organ, das sogenannte Erkennungsorgan, das es gestattet:
. einerseits mindestens eine Amplitudenänderung einer Stärke aufzunehmen, die mindestens gleich dem ersten vorgegebenen Amplitudenwert einer von außen auf das Werkzeug (2) wirkenden Kraft ist, und
. andererseits ein elektrisches Signal zu erzeugen, welches das Vorhandensein dieser Amplitudenänderung von mindestens der gleichen Stärke wie der des ersten vorgegebenen Wertes meldet, und
- dieses Erkennungsorgan so zwischen dem Werkzeug (2) und einer Halterung dieses Werkzeugs zu platzieren, dass das genannte Organ zumindest den Amplitudenänderungen einer von außen auf das Werkzeug (2) wirkenden Kraft ausgesetzt wird, zumindest wenn es die Fläche (9) berührt,
- mindestens eine Funktionszelle, um
. an diesem Werkzeug (2) die Amplitudenänderungen einer von außen auf das Werkzeug (2) wirkenden Kraft zu überwachen, und auf das Auftreten einer Amplitudenänderung von mindestens der gleichen Stärke wie der des ersten vorgegebenen Wertes zu achten, und
. einerseits das Auftreten der Amplitudenänderung von mindestens der gleichen Stärke wie der des ersten vorgegebenen Wertes und andererseits den Zeitpunkt zu überwachen, an dem eine solche Änderung auftritt, um so anzunehmen, dass das Eintreten dieses Zeitpunktes den genannten zweiten Zeitpunkt (T2) darstellt.

14. Technische Mittel nach Anspruch 11 zur Erkennung des Werkzeugs (2) an der genannten zweiten Position (6), wenn die genannte zweite Position (6) als eine Position definiert ist, an der das Werkzeug (2) eine Fläche (9) berührt, die sich auf der Bahn (4) dieses Werkzeugs (2) befindet, die mindestens folgendes aufweisen:
- mindestens ein elektrisches Schütz, das so auf dem Werkzeug (2) angeordnet ist, dass das genannte Schütz betätigt wird, wenn das Werkzeug (2) die Fläche (9) berührt,
- mindestens eine Funktionszelle, um einerseits die Betätigung des Schützes und andererseits den Zeitpunkt der Betätigung des genannten Schützes zu überwachen und anzunehmen, dass das Eintreten dieses Zeitpunktes den genannten zweiten Zeitpunkt (T2) darstellt.

15. Bearbeitungsmaschine (1000), die mindestens ein Antriebsmittel mit Inkrementalbetrieb aufweist, wobei dieses Antriebsmittel mehrere Betätigungsvorrichtungen (7) des Werkzeugs (2) so betätigt, dass ein Bearbeitungsgang an einem zu bearbeitenden, auf dem Werkstückhalter dieser Bearbeitungsmaschine (1000) befestigten Werkstückrohling ausgeführt wird,
wobei die genannte Bearbeitungsmaschine (1000) mit einem Steuerungsprogramm arbeitet, das in einer Schritttabelle gespeicherte numerische Daten dazu benutzt, jedem Antriebsmittel eine Reihe inkrementaler Verfahrbefehle zuzuweisen, die entsprechend einer zeitabhängigen Variablen aufeinander folgen und die Befehlsfolge in der Schritttabelle enthalten ist,
wobei die genannte Schritttabelle
. auf der Grundlage von Ergebnissen einer Berechnung erstellt wird, die in Abhängigkeit von der Zeit die optimale Bearbeitungsbahn ermittelt, und
. es gestattet, ein vorgegebenes Profil mit einem vorgegebenen Werkstoff unter Berücksichtigung der Merkmale der Bearbeitungsmaschine (1000) zu erhalten, wobei diese Bearbeitungsmaschine **dadurch gekennzeichnet ist, dass** sie die technischen Mittel der Ansprüche 10 bis 14 aufweist, um das Verfahren nach einem der Ansprüche 1 bis 9 anzuwenden.

16. Software zur Anwendung des Verfahrens nach einem der Ansprüche 1 bis 9, wobei diese Software Befehlscodes enthält, die dazu geeignet sind, auf einem Datenträger gelesen oder gespeichert zu werden, wobei die genannten Codes auf einem Rechner ausführbar sind, der zur Erzeugung von Verfahrbefehlen für eine Bearbeitungsmaschine (1000) bestimmt ist, die mindestens ein Antriebsmittel mit Inkrementalbetrieb aufweist, wobei dieses Antriebsmittel mindestens eine Betätigungsvorrichtung (7) des Werkzeugs (2) so betätigt, dass mindestens ein Bearbeitungsgang an einem zu bearbeitenden, auf dem Werkstückhalter dieser Bearbeitungsmaschine (1000) befestigten Werkstückrohling ausgeführt wird, wobei die genannte Software **dadurch gekennzeichnet ist, dass** sie Folgendes aufweist:
- einen vorausgehenden Schritt, in dem man die theoretische Dauer (D1) für den vom Werkzeug (2) auf der vorgegebenen, ausgerichteten Achse (W) zwischen der dritten Position (8) und der ersten Position (5) zurücklegten Verfahrweg berechnet und speichert, wobei diese Berechnung in Abhängigkeit von der Gleichung für die Verfahrgeschwindigkeit des Werkzeugs (2) und von Parametern (P8) und P5) der genannten dritten Position (8) und ersten Position (5) auf der vorgegebenen, ausgerichteten Achse (W) ausgeführt wird,
- folgende Schritte, in denen man
a) während einer vorgegebenen Anzahl von Verfahrzyklen des Werkzeugs (2) für jeden Zyklus
. die Ist-Dauer (D2) der Fahrt des Werkzeugs (2) zwischen der dritten Position (8) und der zweiten Position (6) misst, und dann
. den Zeitunterschied (E) berechnet, der während des betreffenden Zyklus zwischen der theoretischen Dauer (D1) der Fahrt des Werkzeugs (2) und der Ist-Dauer (D2) der Fahrt des Werkzeugs (2) besteht,
b) am Ende der vorgegebenen Anzahl von Zyklen
. den Wert des durchschnittlichen Zeitunterschieds (EM) berechnet, der zwischen der theoretischen Dauer (D1) der Fahrt des Werkzeugs (2) und der Ist-Dauer (D2) der Fahrt des Werkzeugs (2) besteht, und diesen Wert des durchschnittlichen Zeitunterschieds (EM) zur Ermittlung des Wertes der durchschnittlichen Positionsabweichung (EP) des Werkzeugs (2) zur ersten Position (5) heranzieht,
. den Wert der durchschnittlichen Positionsabweichung (EP) zur Beeinflussung des Betriebs der Betätigungsvorrichtung (7) des Werkzeugs (2) und zur Korrektur der Parameter heranzieht, die zumindest die erste Position (5) des Werkzeugs zumindest auf der vorgegebenen, ausgerichteten Achse (W) im Bezugsraum (3) bestimmen.

17. Magnetischer oder optischer Datenträger, auf dem eine Software gespeichert ist, die Verfahrensschritte nach Anspruch 1 und Befehlescodes aufweist, die dazu geeignet sind, auf einem Datenträger gelesen oder gespeichert zu werden, wobei die genannten Codes auf einem Rechner ausführbar sind, der zur Erzeugung von Verfahrbefehlen für eine Bearbeitungsmaschine (1000) bestimmt ist, die mindestens ein Antriebsmittel mit Inkrementalbetrieb aufweist, wobei dieses Antriebsmittel mindestens eine Betätigungsvorrichtung (7) des Werkzeugs (2) so betätigt, dass ein Bearbeitungsgang an einem zu bearbeitenden, auf dem Werkstückhalter dieser Bearbeitungsmaschine (1000) befestigten Werkstückrohling ausgeführt wird.
